# EUROPEAN PATENT APPLICATION

(11) **EP 2 214 099 A1**
(43) Date of publication of application: **04.08.2010**
(21) Application number: 09151720.1
(22) Date of filing: 30.01.2009
(51) Int. Cl.: G06F 9/45

(54) **Method for software package deployment in a network node**

(71) Applicant: Tieto Oyj, 00440 Helsinki (FI)
(72) Inventor: Kauranen, Jorma, 00960 Helsinki (FI)
(74) Representative: Simmelvuo, Markku Kalevi

(57) **Abstract**

The invention relates to a method in which a handler program for software packages is defined and initiated for a directory within a server node, which is fixed for a given user or a remote network node. Upon receiving at least part of a software package to the directory from a remote network node, the handler determines an action associated with at least one first application definition file in the software package by the instance of the software package handler entity. The software package is tested using a software configuration available in the server node only to allow distribution to a client node.

## Description

### BACKGROUND OF THE INVENTION

### Field of the invention:

The invention relates to software development in computer system. Particularly, the invention relates to a method for the deployment of a software package in a network node.

### Description of the Related Art:

Software is often developed for an environment which comprises a multitude of off-the-shelf interface components. It is no longer possible to develop software by relying exclusively on the services of the operating system and a single programming language compiler. The software developed must be able to communicate with the interface components to provide the functionality desired. The interface components include, for example, database systems, network communication systems, distributed application communication systems and user interface control systems. The interface components provide state-of-art data resilience, application distribution and user interface experience. In the production of an executable version of the software is often used a wide range of development tools. Therefore, it is necessary for the software development process to provide a complicated application environment to be able to develop and test new computer programs. Often the interface components and the development tools are expensive software products for which licenses must be paid for each workstation used. In many cases software may also be developed for large scale server environments, which increases the investment involved. The large scale server environment may not be available for every software developer even though it is vital to test the software developed in actual target environment before the software developed is delivered to customers. Test beds and cross-system software development environments may be available for developers, but all interactions between the interface components may not be tested without the actual target environment. A natural solution is to allow remote access to a centralized large scale test server for remote software developers. The disadvantage is that this requires extensive security measures to control access to the large scale test server. Firewalls must be traversed in order to enable file transfer and remote sessions. There is also the possibility that individual remote developers interfere with one another, for example, by accidentally modifying or deleting one another's files. Therefore, a method and a system would be beneficial which would automate the remote deployment of software components for a large scale server environment. The same problem applies also to any cross-system software development where the availability of the target environment is limited.

### SUMMARY OF THE INVENTION:

The invention relates to a method, comprising: associating a software package handler entity type with a memory storage directory; forming an instance of a software package handler entity, the software package handler entity being of the software package handler entity type; obtaining an identity associated with a remote user; determining association of the memory storage directory with the identity; receiving at least one part of a software package comprising at least one application definition file to the memory storage directory in an apparatus from a remote network node of the remote user; invoking the instance of the software package handler entity in response to the receiving of the at least one part of the software package; and determining an action associated with at least one first application definition file in the software package by the instance of the software package handler entity.

The invention relates also to an apparatus, comprising: a memory configured to store a memory storage directory; and at least one processor configured to associate a software package handler entity type with the memory storage directory, to form an instance of a software package handler entity, the software package handler entity being of the software package handler entity type, to obtain an identity associated with a remote user, to determine association of the memory storage directory with the identity, to receive at least one part of a software package comprising at least one application definition file to the memory storage directory from a remote network node of the remote user, to invoke the instance of the software package handler entity in response to the receiving of the at least one part of the software package and to determine an action associated with at least one first application definition file in the software package by the instance of the software package handler entity.

The invention relates also to an apparatus, comprising: means for associating a software package handler entity type with a memory storage directory; means for forming an instance of a software package handler entity, the software package handler entity being of the software package handler entity type; means for obtaining an identity associated with a remote user; means for determining association of the memory storage directory with the identity; means for receiving at least one part of a software package comprising at least one application definition file to the memory storage directory in an apparatus from a remote network node of the remote user; means for invoking the instance of the software package handler entity in response to the receiving of the at least one part of the software package; and means for determining an action associated with at least one first application definition file in the software package by the instance of the software package handler entity.

The invention relates also to a computer program comprising code adapted to perform the following steps when executed on a data-processing system: associating a software package handler entity type with a memory storage directory; forming an instance of a software package handler entity, the software package handler entity being of the software package handler entity type; obtaining an identity associated with a remote user; determining association of the memory storage directory with the identity; receiving at least one part of a software package comprising at least one application definition file to the memory storage directory in an apparatus from a remote network node of the remote user; invoking the instance of the software package handler entity in response to the receiving of the at least one part of the software package; and determining an action associated with at least one first application definition file in the software package by the instance of the software package handler entity.

The invention relates also to a computer program product comprising: associating a software package handler entity type with a memory storage directory; forming an instance of a software package handler entity, the software package handler entity being of the software package handler entity type; obtaining an identity associated with a remote user; determining association of the memory storage directory with the identity; receiving at least one part of a software package comprising at least one application definition file to the memory storage directory in an apparatus from a remote network node of the remote user; invoking the instance of the software package handler entity in response to the receiving of the at least one part of the software package; and determining an action associated with at least one first application definition file in the software package by the instance of the software package handler entity.

The invention relates also to a method in which a handler program for software packages is defined and initiated for a directory within a server node, which is fixed for a given user or a remote network node. Upon receiving at least part of a software package to the directory from a remote network node, the handler determines an action associated with at least one first application definition file in the software package by the instance of the software package handler entity. The software package is tested using a software configuration available in the server node only before allowing distribution to a client node, for example, the third network node.

In one embodiment of the invention, the software package handler entity type is an object class. An object created from that class is the software package handler entity. The objects created from that class are referred to as instances of the software package handler entity. The object creation is also referred to as instantiation. Different objects belonging to an object class may have different variable values. In one embodiment of the invention, the forming of the instance of the software package handler entity involves allocation of memory for variables in a particular object, that is, the instance of the software package handler entity. The forming may involve the use of a creation method from a main method or program. There may be a separate thread or software process executing for each instance of the software package handler entity. In one embodiment of the invention, the instance of the software package handler entity is invoked by providing input data to it and allowing its execution. By handling may be meant, for example, the scanning of the contents of the software package and performing actions for files contained therein.

In one embodiment of the invention, the software package handler entity might be referred to as the software package scanner entity.

In one embodiment of the invention, the apparatus may be a network node receiving the software package from a remote node such as a developer workstation. In one embodiment of the invention, the apparatus may be a further network node receiving the software package from a preceding network node that has determined the apparatus as the correct application compilation, forming or testing environment for the software package based on data contained in the software package.

In one embodiment of the invention, the determining of the association of the memory storage directory with the identity involves the determination of a directory using a mapping from an identity to a directory. The mapping may use a mapping table. In one embodiment of the invention, the identity associated with the remote user is a logical name identifying a username and a domain name. The identity may also be, for example, an E-mail address or a Session Initiation Protocol (SIP) name.

In one embodiment of the invention the memory storage directory is stored in a database, for example, in at least one database table. There may be, for example, an entry, a row or a record representing each file or subdirectory within the memory storage directory. The database may be, for example, a relational, an object or a network database. In one embodiment of the invention, a server entity or another software component that receives the software package forms or modifies at least one database table to accommodate the software package in a database. The software package handler entity instance may be configured to read the software package data from a database. The instance is invoked, for example, upon detecting a change in a database table accommodating the memory storage directory.

In one embodiment of the invention, an application production entity is determined for the at least one first application definition file by the software package handler entity. Thereafter, the at least one first application processes the definition file in the application production entity to provide at least one executable application.

In one embodiment of the invention, a testing program is configured to test the at least one executable application in the apparatus using at least one software product associated with the apparatus.

In one embodiment of the invention, a testing program is configured to determine the success of the testing using at least one predetermined expected output. The software package handler entity is configured to informing the success of the testing to a remote user.

In one embodiment of the invention, the software package handler entity is configured to determine, based on a type of the at least one first application definition file, a second network node by a further instance of the software package handler entity and to transfer the at least one part of the software package to a second network node at a request of an instance of the software package handler entity.

In one embodiment of the invention, the application production entity comprises at least one of a compiler, a code generator, a user interface form generator and a database management system.

In one embodiment of the invention, the at least one software product comprises at least one of a database system, a communication system, a middleware system, an application execution environment and an operating system.

In one embodiment of the invention, the application definition file comprises at least one of a source code file, a form definition file, a database schema definition file or data structure definition file.

In one embodiment of the invention, the instance of the software package handler entity comprises a thread or an application process. The thread may be, for example, a JAVA™ thread or a native operating system process. The thread may be from any virtual machine, not just JAVA™. In one embodiment of the invention, the software package handler may be, for example, an object class, procedure, subroutine or program block. The instance of the software package handler may be an object, that is, an object instance, a procedure or subroutine instance within an execution stack, or a process or thread executing program code defined in the program block.

In one embodiment of the invention, a new instance is created as a thread from the software package handler entity program code or object class code in several occasions of the method execution. These occasions comprise, for example, web server starting, receiving of data to the directory determined for the software package and completion the execution of at least one application program formed using the software package.

In one embodiment of the invention, the second network node may run an operating system different from the operating system of the remote network node.

In one embodiment of the invention, the software package handler entity type comprises an object class. In one embodiment of the invention, the handler entity invokes methods for scanning the software package, executing actions for files or file types associated with the software package and to distribute the files within the software package. The methods may be executed from different object classes for each of the scanning, action and distribution methods.

In one embodiment of the invention, the apparatus comprises a permanent storage, which may be comprised in a secondary memory, for example, as a disk partition, directory or a file. The permanent storage may be at least part of the storage space of a computer readable medium such as a flash memory, a magnetic or an optic disk.

In one embodiment of the invention, the computer program is stored on a computer readable medium. The computer readable medium may be a removable memory card, magnetic disk, optical disk or magnetic tape.

In one embodiment of the invention, the apparatus further comprises: said at least one processor configured to determine an application production entity for the at least one first application definition file and to process the at least one first application definition file in the application production entity to provide at least one executable application.

In one embodiment of the invention, the apparatus further comprises: said at least one processor configured to test the at least one executable application in the apparatus using at least one software product associated with the apparatus.

In one embodiment of the invention, the apparatus further comprises: said at least one processor configured to determine the success of the testing using at least one predetermined expected output and to inform the success of the testing to a second remote user.

In one embodiment of the invention, the apparatus further comprises: said at least one processor configured to determine, based on a type of the at least one first application definition file, a second network node by the instance of the software package handler entity and to transfer the at least one part of the software package to a second network node at a request of the instance of the software package handler entity.

In one embodiment of the invention, within the apparatus, the application production entity comprises at least one of a compiler, a code generator, a user interface form generator and a database management system.

In one embodiment of the invention, within the apparatus, the at least one software product comprises at least one of a database system, a communication system, a middleware system, an application execution environment and an operating system.

In one embodiment of the invention, within the apparatus, the application definition file comprises at least one of a source code file, a form definition file, a database schema definition file or data structure definition file.

In one embodiment of the invention, within the apparatus, the instance of the software package handler entity comprises a thread or an application process.

In one embodiment of the invention, within the apparatus, the software package handler entity type comprises an object class.

The embodiments of the invention described hereinbefore may be used in any combination with each other. Several of the embodiments may be combined together to form a further embodiment of the invention. A method, an apparatus or a computer program to which the invention is related may comprise at least one of the embodiments of the invention described hereinbefore.

The benefits of the invention are related to improved security and discipline in the deployment and testing of software packages in a specific testing environment. The deployment and testing process is made thus more effective and faster. The quality of the deployment and testing processes is improved. Further, the amount of documentation may be reduced for operating the processes.

### BRIEF DESCRIPTION OF THE DRAWINGS:

The accompanying drawings, which are included to provide a further understanding of the invention and constitute a part of this specification, illustrate embodiments of the invention and together with the description help to explain the principles of the invention. In the drawings:
**Fig. 1** is a block diagram illustrating the receiving of a software package from a remote developer node to a first and a second network node in one embodiment of the invention;
**Fig. 2A** is a flow chart illustrating a first part of a method for software package processing in one embodiment of the invention;
**Fig. 2B** is a flow chart illustrating a second part of a method for software package processing in one embodiment of the invention;
**Fig. 3** is a block diagram illustrating an apparatus in one embodiment of the invention.

### DETAILED DESCRIPTION OF THE EMBODIMENTS:

Reference will now be made in detail to the embodiments of the present invention, examples of which are illustrated in the accompanying drawings.

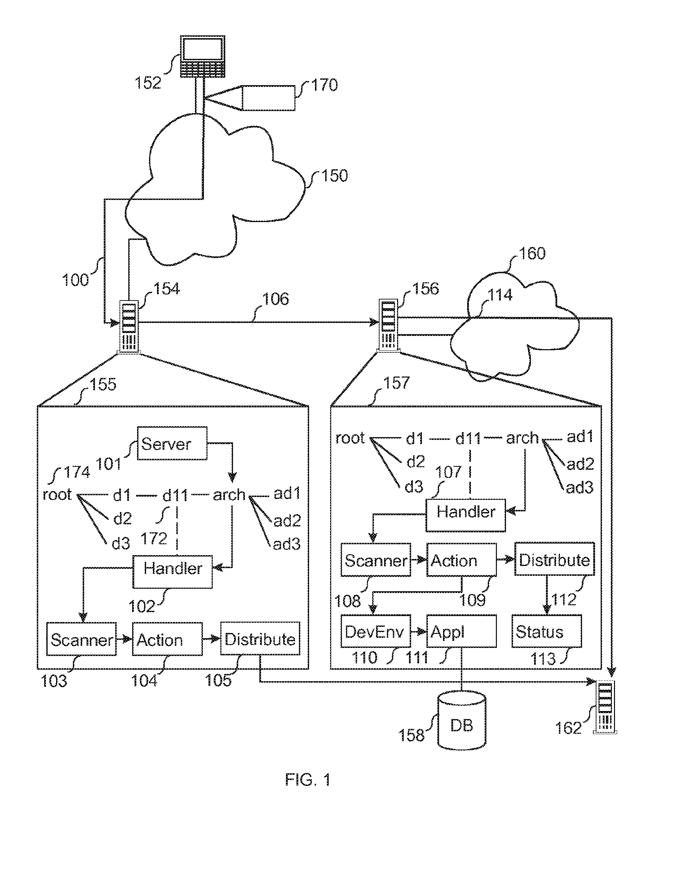

Figure 1 is a block diagram illustrating the receiving of a software package from a remote developer node to a first and a second network node in one embodiment of the invention.

In Figure 1 there are networks 150 and 160. The networks may be Intranets or they may represent the Internet. The networks are, for example, Internet Protocol (IP) networks. There are network nodes 154 and 156, connected to networks 150 and 160, respectively. The boxes 155 and 157 illustrate the internal functions of network nodes 154 and 156, respectively. There is also a target network node 162, to which software packages are ultimately delivered after application generation and testing in network node 156. There is a remote developer node 152 which may be, for example, a Microsoft® WINDOWS workstation or a Linux workstation. Remote developer node 152 comprises a miniature version of the application environment in network node 156 for the development, initial testing and debugging of a software package 170, which comprises at least one application definition file. An application definition file may be, for example, a source code file, a form definition file, a database schema definition file or data structure definition file. An application definition file is generally a structured document or any file that may be parsed by a computer to yield at least part of an application or application functionality. The miniature version of the application environment in developer node 152 may comprise same applications as in network node 156, but as Microsoft® WINDOWS or Linux versions.

Initially, software package 170 is created or modified in developer node 152 using at least one developer tool. The term developer tool comprises, for example, a compiler, a code generator, a form design application, a report design application or a database schema definition application. A developer who uses developer node 152 indicates a file or a set of files forming software package 170 to a network browser application. In one embodiment of the invention, the developer may just click or double click a row or an icon representing software package 170 in a browser window or list that is provided for selecting a software package for uploading. In one embodiment of the invention, the developer may drag an icon representing software package 170 on top of a symbol representing uploading. Thereafter, the uploading is initiated. The browser application opens a browsing session with network node 154. The developer or developer node 152 is identified during the browsing session for network node 154. In one embodiment of the invention, the developer is identified using an identity. The identity is associated with a remote user, for example, the developer. The remote user may be, for example, a person, a legal entity or a group of users. In one embodiment of the invention, the remote user may be just a network node without a specific user identity, for example, developer node 152. Thus, the identification i.e. identity may be based on an IP address of developer node 152 or any logical name associated with the developer or developer node 152 that is provided during the browsing session to network node 154. The developer or developer node 152 may be authenticated during or before the browsing session. A directory 172 in a directory tree 174 is associated with the identity of the developer or developer node 152. The association is performed, for example, in a server entity 101. Directory tree 174 comprises a root directory, which has subdirectories "d1", d2" and "d3". Subdirectory "d1" has a further subdirectory "d11".

As illustrated with arrow 100, software package 170 is uploaded to network node 154 and stored therein to a target directory 172, named "d11". Network node 154 or the browser in development node 152 may mask directory 172 from the developer and always upload the software package 170 to directory 172. Another option is that the developer is denied access to any other directory than directory 172 so that a refusal message is returned to developer node 152 in case a Hypertext Transfer Protocol (HTTP) POST operation is attempted specifying any other directory for software package 170. Server entity 101 receives software package 170 and stores it to directory 172.

In one embodiment of the invention, directory 172 or the directory structure within software package 170 may be stored to a database after the uploading, for example, by server entity 101. Directory 172 may be already defined in a database before the uploading. The uploading of software package 170 in that case causes the adding of a new entry or a record, for example, to a database table representing directory 172 or directory tree 174.

For directory 172 there is defined a handler entity 102. Handler entity 102 may have a thread in ready-state for scheduling or an instance of handler entity 102 may be created by an object factory (not shown). Within directory tree 174 there may be any number of directories to which a specific handler in ready-state is associated beforehand or for which an instance is created by the object factory whenever a change associated with that specific directory is detected. The change may be detected by the object factory or by the operating system within network node 154. The changes may also be checked periodically by handler entity 102 or informed explicitly by operating system services of network node 154 for the object factory or handler entity 102. In response to detecting software package 170 in directory 172 handler entity invokes a scanner method 103 which scans the files within software package 170. The files within software package 170 may comprise, for example, a directory or multiple nested directories, such as directories "ad1", "ad2" and "ad3" illustrated in Figure 1. Software package 170 may be an archive file, which may also be received in network node 154 in compressed format. The decompression may be performed to a Random Access Memory (RAM) or to a temporary file or directory in a persistent storage. For each file detected or each file of predefined type an action method 104 is invoked by handler entity 102 or via scanner method 103. In response to detecting specific file categories or plainly just any files, handler entity 102 or action method 104 selects network node 156 as the destination for software package 170. Handler entity 102 or action method 104 invokes a distribute method 105 to transfer software package 170 to network node 156. Network node 156 may also be selected based on the identity of developer or developer node 152 or information contained in any of the files within software package 170. Network node 156 may also be selected based on the file type of at least one file within software package 170. Distribute method 105 may also provide software package 170 to network node 162, if deployment to customer is indicated to server 101 by developer via the browsing session.

As illustrated with arrow 106 software package is transferred to network node 156. Software package 170 may be sent by handler 102, for example, via distribute method 105 as a single file or as separate files contained within the software 170. In such a case the software package 170 may appear from the transfer point of view as a mere logical concept. Software package is stored to a target directory within network node 156. The target directory may be specified from network node 154 via the file transfer or may be determined by network node 156. Handler entity 107 is associated with the target directory "d11". Upon receiving at least one file from software package 170 to the target directory, handler 107 is invoked. In one embodiment of the invention, an object factory, upon detecting that there is a software package in one of a number of directories to be monitored by the factory, creates an instance of a handler class object, such as handler 107, and indicates the directory to the instance of the handler class object. Upon being informed of the target directory in its responsibility and the existence of software package 170 within the directory, handler entity 107 invokes scanner method 108 to scan the contents of software package 170. The software package is illustrated in Figure 1 as the file "arch", which further contains subdirectories "ad1", "ad2" and "ad3". Upon detecting a file of specific type, scanner method 108 invokes an action method 109. The type of action method may be specific to the type of the file. Action method 109 submits the file for processing by a development environment entity 110. Development environment entity 110 may be a developer tool in the sense discussed hereinbefore. For example, source files may be compiled, executable form and report definitions may be created from form and report structure documents, and databases may be created using database schemas provided. Development environment entity 110 produces an application 111 using at least one file within software package 170. Application 111 may be tested by at least one tester user or application within network node 156. Application 111 may access during its test execution a database 158. For example, upon detecting desired results files or any desired data in the target directory "d11" or any other predefined directory, the object factory may create a further instance of the object class for handler entity 107. Handler entity 107 may invoke a distribute method 112, which further creates a status report 113. Status report 113 may be provided to network node 162 to start the transfer of the executable version of the software package to network node 162. Status report 113 may be a delivery document for a client. The transfer may also be performed by distribute method 112. The transfer is illustrated with arrow 114.

In one embodiment of the invention, the actual transfer of software package 170 or its executable version may be performed by an action method instead of a distribute method. The responsibility of the distribute method is to deliver status report 113 or another delivery report to a remote client.

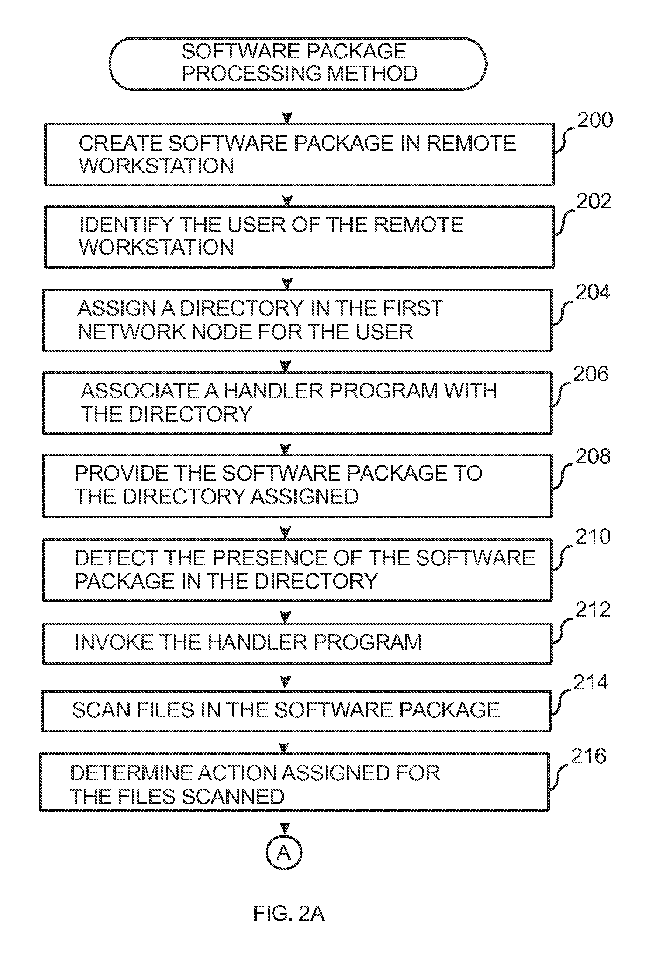

Figure 2A is a flow chart illustrating a first part of a method for software package processing in one embodiment of the invention.

At step 200 a new software package is created or an existing one is modified in a remote workstation. In one embodiment of the invention, remote workstation establishes a browsing session to a first network node.

At step 202 the identity of the user of the remote workstation is provided to the first network node. The identity of the user of the remote workstation is to be understood as having the same meaning as the identity associated with a remote user. In one embodiment of the invention, the user of the remote workstation comprises an entire group of users. In one embodiment of the invention, the identity of the user identifies the remote workstation instead of a specific user and, therefore, constitutes an identity of the remote workstation. However, the identity of the user is used hereinafter to refer also to the identity of the workstation.

At step 204 a directory is assigned in the first network node for the identity of the user. The assignment may also be performed before the browsing session is established.

At step 206 a handler program is associated with the directory in the first network node. The handler program, in other words, a handler entity may comprise, for example, a handler thread, a handler class, a handler process or a handler subroutine. The association of the directory may be performed beforehand, that is, before the browsing session is established.

At step 208 the software package is provided from the remote workstation to the first network node. The software package may be provided as a single file, for example, an archive file or as separate files. The providing may utilize protocols such as the HTTP or the File Transfer Protocol (FTP) familiar to a person skilled in the art.

At step 210 the presence of the software package or at least the presence of at least one file from the software package is detected in the directory.

At step 212, in one embodiment of the invention, the handler program is invoked. The handler may be invoked by a further program that creates instances of other programs.

At step 214 the handler program or a separate scanner routine scans the files in the software package.

At step 216 the handler program or a separate scanner routine determines an action assigned to at least one file within the software package. The action determination may rely on the type of the at least one file or within information provided in the file.

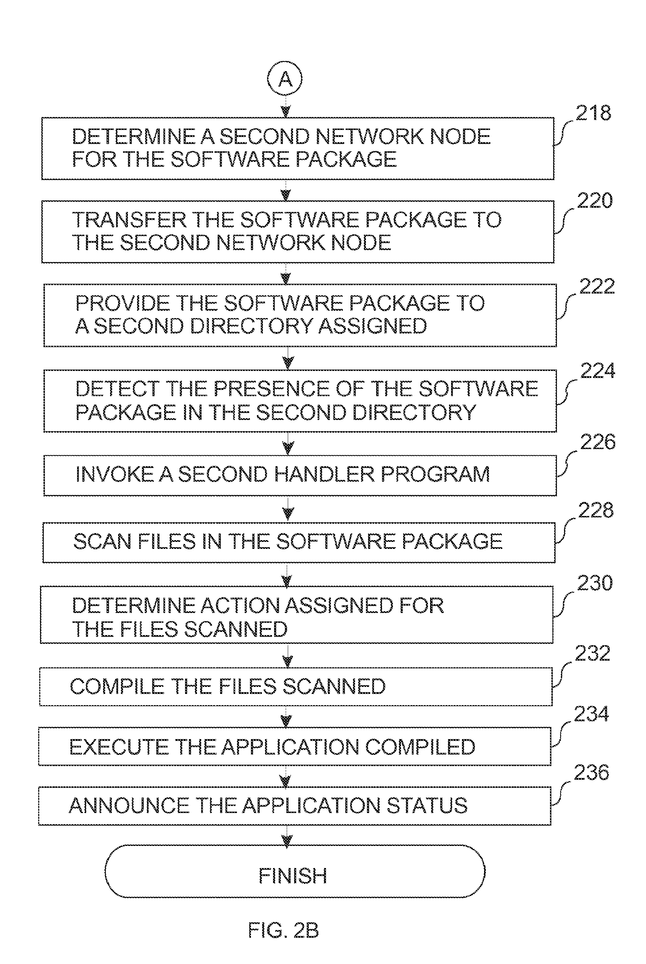

Figure 2B is a flow chart illustrating a second part of a method for software package processing in one embodiment of the invention.

At step 218 a second network node is determined as a target for the software package.

At step 220 the software package is transferred to the second network node. In one embodiment of the invention, the method is finished at this step.

At step 222, in one embodiment of the invention, the software package is provided to a second directory assigned for the purpose in the second network node. The information on the second directory may be received from the first network node.

At step 224, in one embodiment of the invention, the presence of the software package is detected in the second directory within the second network node.

At step 226, in one embodiment of the invention, a second handler program is invoked within the second network node in response to the detection of the software package or at least part of the software package in the second directory.

At step 228, in one embodiment of the invention, the second handler program or a scanner subroutine scans the files in the software package. The files may be scanned in the order of arrival in the second network node.

At step 230, in one embodiment of the invention, the second handler program determines an action assigned for at least one file within the software package. The determination relies on file type information or information contained in at least one file within the software package. In one embodiment of the invention, there may be a metafile within the software package which specifies treatment for at least one other file within the software package.

At step 232, in one embodiment of the invention, the actions determined for the at least one file within the software package are executed. In one embodiment of the invention, the action comprises the compilation or processing of at least one file within the software package. The compilation or processing parses the file to generate an executable form of at least one application to be formed from the software package. The compilation or processing may also parse the file to generate an executable form of a part of at least one application to be formed from the software package. In one embodiment of the invention, the file processed or compiled is an application definition file.

At step 234, in one embodiment of the invention, the executable versions of applications compiled or otherwise created using the software package are executed. In one embodiment of the invention, the execution is performed to test the applications in a production environment type of an environment. The testing may be performed by human users or by automatic tester applications or stubs.

At step 236, in one embodiment of the invention, the application status is announced by the second handler program to a user. The executable version of the software package may also be transferred to a further third network node.

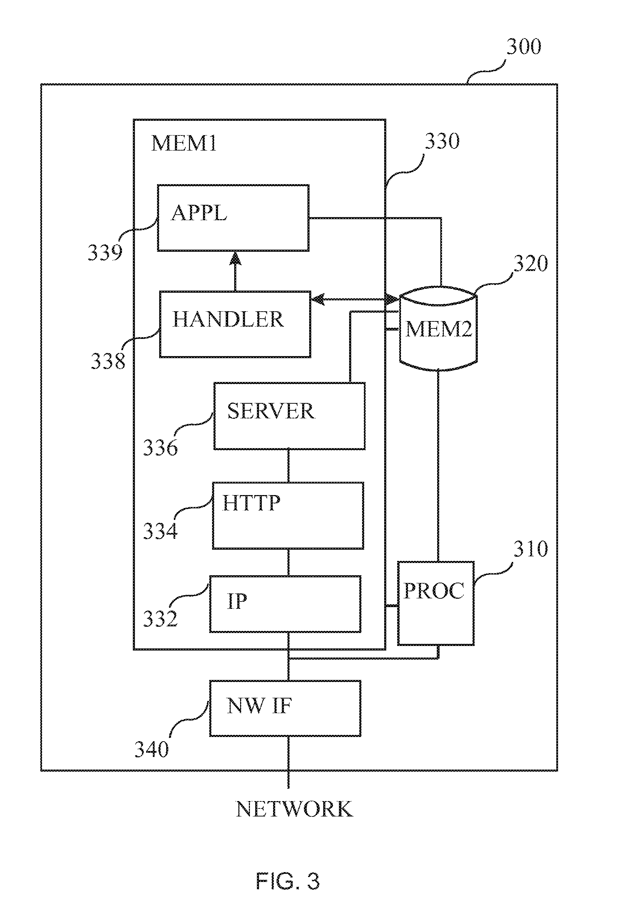

Figure 3 is a block diagram illustrating an apparatus in one embodiment of the invention. Apparatus 300 comprises a processor 310, a primary memory 330 and a secondary memory 320. There may be more than one processor. A processor may comprise multiple cores. Apparatus 300 comprises also a network interface 340 such as, for example, an Ethernet card. Primary memory 330 may be a Random Access Memory (RAM). Secondary memory 320 is a non-volatile memory such as, for example, a magnetic or optical disk. When processor 310 executes functionalities associated with the invention, memory 330 comprises, for example, an Internet Protocol entity 332, a Hypertext Transfer Protocol (HTTP) entity 334, a server entity 336, a handler entity 338 and an application entity 339. Application entity is produced during the generation of a software package obtained to the apparatus from a remote network node. The entities within apparatus 300 in Figure 3, such as handler entity 338, server entity 336 and other entities may be implemented in a variety of ways. They may be implemented as processes executed under the native operating system of the network node. The entities may be implemented as separate processes or threads or so that a number of different entities are implemented by means of one process or thread. A process or a thread may be the instance of a program block comprising a number of routines, that is, for example, procedures and functions. The entities may be implemented as separate computer programs or as a single computer program comprising several routines or functions implementing the entities. The program blocks are stored on at least one computer readable medium such as, for example, a memory circuit, memory card, magnetic or optic disk. Some entities may be implemented as program modules linked to another entity. The entities in Figure 3 may also be stored in separate memories and executed by separate processors, which communicate, for example, via a message bus or an internal network within the network node. An example of such a message bus is the Peripheral Component Interconnect (PCI) bus.

The exemplary embodiments of the invention can be included within any suitable device, for example, including any suitable servers, workstations, PCs, laptop computers, PDAs, Internet appliances, handheld devices, cellular telephones, wireless devices, other devices, and the like, capable of performing the processes of the exemplary embodiments, and which can communicate via one or more interface mechanisms, including, for example, Internet access, telecommunications in any suitable form (e.g., voice, modem, and the like), wireless communications media, one or more wireless communications networks, cellular communications networks, G3 communications networks, Public Switched Telephone Network (PSTNs), Packet Data Networks (PDNs), the Internet, intranets, a combination thereof, and the like.

It is to be understood that the exemplary embodiments are for exemplary purposes, as many variations of the specific hardware used to implement the exemplary embodiments are possible, as will be appreciated by those skilled in the hardware art(s). For example, the functionality of one or more of the components of the exemplary embodiments can be implemented via one or more hardware devices.

The exemplary embodiments can store information relating to various processes described herein. This information can be stored in one or more memories, such as a hard disk, optical disk, magneto-optical disk, RAM, and the like. One or more databases can store the information used to implement the exemplary embodiments of the present inventions. The databases can be organized using data structures (e.g., records, tables, arrays, fields, graphs, trees, lists, and the like) included in one or more memories or storage devices listed herein. The processes described with respect to the exemplary embodiments can include appropriate data structures for storing data collected and/or generated by the processes of the devices and subsystems of the exemplary embodiments in one or more databases.

All or a portion of the exemplary embodiments can be implemented by the preparation of application-specific integrated circuits or by interconnecting an appropriate network of conventional component circuits, as will be appreciated by those skilled in the electrical art(s).

As stated above, the components of the exemplary embodiments can include computer readable medium or memories according to the teachings of the present inventions and for holding data structures, tables, records, and/or other data described herein. Computer readable medium can include any suitable medium that participates in providing instructions to a processor for execution. Such a medium can take many forms, including but not limited to, non-volatile media, volatile media, transmission media, and the like. Non-volatile media can include, for example, optical or magnetic disks, magneto-optical disks, and the like. Volatile media can include dynamic memories, and the like. Transmission media can include coaxial cables, copper wire, fiber optics, and the like. Transmission media also can take the form of acoustic, optical, electromagnetic waves, and the like, such as those generated during radio frequency (RF) communications, infrared (IR) data communications, and the like. Common forms of computer-readable media can include, for example, a floppy disk, a flexible disk, hard disk, magnetic tape, any other suitable magnetic medium, a CD-ROM, CDRW, DVD, any other suitable optical medium, punch cards, paper tape, optical mark sheets, any other suitable physical medium with patterns of holes or other optically recognizable indicia, a RAM, a PROM, an EPROM, a FLASH-EPROM, any other suitable memory chip or cartridge, a carrier wave or any other suitable medium from which a computer can read.

While the present inventions have been described in connection with a number of exemplary embodiments, and implementations, the present inventions are not so limited, but rather cover various modifications, and equivalent arrangements, which fall within the purview of prospective claims.

It is obvious to a person skilled in the art that with the advancement of technology, the basic idea of the invention may be implemented in various ways. The invention and its embodiments are thus not limited to the examples described above; instead they may vary within the scope of the claims.

## Claims

1. A method, comprising:
associating a software package handler entity type with a memory storage directory;
forming an instance of a software package handler entity, the software package handler entity being of the software package handler entity type;
obtaining an identity associated with a remote user;
determining association of the memory storage directory with the identity;
receiving at least one part of a software package comprising at least one application definition file to the memory storage directory in an apparatus from a remote network node of the remote user;
invoking the instance of the software package handler entity in response to the receiving of the at least one part of the software package; and
determining an action associated with at least one first application definition file in the software package by the instance of the software package handler entity.

2. The method according to claim 1, the method further comprising:
determining an application production entity for the at least one first application definition file; and
processing the at least one first application definition file in the application production entity to provide at least one executable application.

3. The method according to claim 2, the method further comprising:
testing the at least one executable application in the apparatus using at least one software product associated with the apparatus.

4. The method according to claim 3, the method further comprising:
determining the success of the testing using at least one predetermined expected output; and
informing the success of the testing to a second remote user.

5. The method according to claim 1, the method further comprising:
determining, based on a type of the at least one first application definition file, a second network node by the instance of the software package handler entity; and
transferring the at least one part of the software package to a second network node at a request of the instance of the software package handler entity.

6. The method according to claim 1, wherein the application production entity comprises at least one of a compiler, a code generator, a user interface form generator and a database management system.

7. The method according to claim 1, wherein the at least one software product comprises at least one of a database system, a communication system, a middleware system, an application execution environment and an operating system.

8. The method according to claim 1, wherein the application definition file comprises at least one of a source code file, a form definition file, a database schema definition file or data structure definition file.

9. The method according to claim 1, wherein the instance of the software package handler entity comprises a thread or an application process.

10. The method according to claim 1, wherein the software package handler entity type comprises an object class.

11. An apparatus, comprising:
a memory configured to store a memory storage directory; and
at least one processor configured to associate a software package handler entity type with the memory storage directory, to form an instance of a software package handler entity, the software package handler entity being of the software package handler entity type, to obtain an identity associated with a remote user, to determine association of the memory storage directory with the identity, to receive at least one part of a software package comprising at least one application definition file to the memory storage directory from a remote network node of the remote user, to invoke the instance of the software package handler entity in response to the receiving of the at least one part of the software package and to determine an action associated with at least one first application definition file in the software package by the instance of the software package handler entity.

12. An apparatus, comprising:
means for associating a software package handler entity type with a memory storage directory;
means for forming an instance of a software package handler entity, the software package handler entity being of the software package handler entity type;
means for obtaining an identity associated with a remote user;
means for determining association of the memory storage directory with the identity;
means for receiving at least one part of a software package comprising at least one application definition file to the memory storage directory in an apparatus from a remote network node of the remote user;
means for invoking the instance of the software package handler entity in response to the receiving of the at least one part of the software package; and
means for determining an action associated with at least one first application definition file in the software package by the instance of the software package handler entity.

13. A computer program comprising code adapted to perform the following steps when executed on a data-processing system:
associating a software package handler entity type with a memory storage directory;
forming an instance of a software package handler entity, the software package handler entity being of the software package handler entity type;
obtaining an identity associated with a remote user;
determining association of the memory storage directory with the identity;
receiving at least one part of a software package comprising at least one application definition file to the memory storage directory in an apparatus from a remote network node of the remote user;
invoking the instance of the software package handler entity in response to the receiving of the at least one part of the software package; and
determining an action associated with at least one first application definition file in the software package by the instance of the software package handler entity.

14. The computer program according to claim 13, wherein said computer program is stored on a computer readable medium.

15. The computer program according to claim 13, wherein said computer readable medium is a removable memory card, a holographic memory, a magnetic disk or an optical disk.
